Europäisches Patentamt

European Patent Office

Office européen des brevets

(19)

(11) Publication number: **0 211 658**

**A1**

(12) # EUROPEAN PATENT APPLICATION

(21) Application number: 86306083.6

(51) Int. Cl.⁴: **A01D 82/00** , **A01D 43/10**

(22) Date of filing: 06.08.86

(30) Priority: 09.08.85 GB 8520011

(43) Date of publication of application:
25.02.87 Bulletin 87/09

(84) Designated Contracting States:
DE FR NL

(71) Applicant: **NATIONAL RESEARCH
DEVELOPMENT CORPORATION
101 Newington Causeway
London SE1 6BU(GB)**

(72) Inventor: **Klinner, Wilfred Erwin Beechwood
Heath Lane Aspley Heath Woburn Sands
Milton Keynes Buckinghamshire MK 17
8TN(GB)**

(74) Representative: **Laight, Martin Harvey et al
W H Beck, Greener & Company 7 Stone
Buildings Lincoln's Inn
London WC2A 3SZ(GB)**

(54) **Apparatus for and method of conveying and treating crop.**

(57) In apparatus for conveying and treating crop a horizontal rotor (11) collects crop and conveys it upwardly and rearwardly over the rotor beneath a hood (15) extending at least around part of the front half of the rotor (11) and forming with the rotor a crop flow passage. The rotor (11) comprises outwardly extending crop engaging elements (10), preferably flat transverse ribs (23) extending across the rotor, the crop engaging element (10) having a principal plane which traverses the general direction of crop flow. A stationary crop retarding device (9) forms the intake of the crop flow passage and co-operates with the rotor to effect conditioning or other treatment of crop. The crop retarding device is positioned at the intake region of the crop flow passage, and comprises an array of projections (17) which can be adjusted to project to a greater or lesser extent into the crop flow region, and at the position of maximum intrusion, the projections (17) intermesh with the elements (10) on the rotor without contact between the projections (17) and the crop engaging elements (10) of the rotor.

FIG. 1.

FIG.1 (a)  (b)  (c)  (d)

## APPARATUS FOR AND METHOD OF CONVEYING AND TREATING CROP

The present invention relates to apparatus for, and methods of, conveying and treating crop, especially, not exclusively, conveying and conditioning grass and other fibrous fodder crop. The invention is also concerned with other treatment of crop, for example threshing of grain crop, or comminuting forage crop, straw, or other material.

In some aspects the invention provides improvements in the subject matter disclosed in our previously published patent specifications numbers WO 79/00863 and GB-A-2099272. These specifications are concerned, inter alia, with conditioning of grass and other fibrous fodder crop. Conditioning is a form of crop treatment intended to allow moisture to escape from the crop during wilting, without excessive fragmentation of the crop and without excessive loss of nutrients. It is common practice in agriculture to mechanically treat the crop to effect this conditioning, and such mechanical treatment may take various forms including crushing, lacerating, bruising, splitting, spiking, bending and scuffing the stems or leaves of the crop.

There is at present an increasing trend towards the making of forage crops into silage rather than hay, and the outcome of this is that excessive fragmentation of crop is of less importance, and more severe conditioning can be carried out than has previously been the case. Improved forms of pick-up devices which are now available also mean that greater fragmentation of crop can be tolerated during conditioning.

In some aspects the present invention is concerned with improved apparatus for and methods of conditioning grass and other fibrous fodder crop, in which more severe conditioning is provided than has previously been thought to be acceptable. In other aspects the invention is concerned with chopping forage crop, straw, or other material.

According to the present invention there is provided apparatus for conveying and treating crop comprising a crop engaging device in the form of a rotor comprising support means and a plurality of outwardly extending crop engaging elements mounted on the support means for conveying and treating the crop, drive means for driving the rotor in rotation in a sense such that the rotor conveys the crop upwardly and rearwardly over the rotor, a hood extending at least around part of the front half of the rotor and forming with the rotor a crop flow passage between the rotor and the hood along which the crop is conveyed by the rotor, and a further crop engaging device for co-operating with the rotor to effect treatment of crop, the further crop engaging device comprising an array of projections which project into the crop flow region, which overlap with the outer periphery of the crop engaging elements of the rotor, and which intermesh with the elements of the rotor without contact between the projections and the crop engaging elements of the rotor, the arrangement being such that the projections of the further crop engaging device extend along the direction of crop flow, and the further crop engaging device co-operates with the rotor to form substantially the intake region of the crop flow passage, the intake region lying in the front half of the periphery of the rotor.

Preferably there is included adjustment means for varying the extent to which the projections intrude into the crop flow region.

Preferably the projections of the further crop engaging device have a profile along the direction of crop flow which co-operates with the outer periphery of the rotor to provide a converging intake region to the crop flow passage, the shape of the projections being such that adjustment of the amount of intrusion into the crop flow can be made without any substantial change of the shape of the said converging intake region.

Also preferably the further crop engaging device is mounted during normal operation at a stationary position relative to the rotor but is resiliently mounted to allow yielding movement in response to high crop load or heavy objects other than crop.

Thus in preferred forms, the further crop engaging device is not only positioned at the intake region of the crop flow passage, but actually co-operates with the rotor to form the intake region, which is preferably of funnel shape so that the crop is directed gradually and smoothly into the crop flow passage.

Conveniently the resilient mounting of the further crop engaging device comprises means allowing retracting movement, eg pivotal movement, of the array (either by movement of the whole array of projections or a section of the array) so as to produce lesser or greater intrusion of the projections into the crop flow, the pivotting movement of the array being biassed by resilient biassing means towards the position of greater intrusion of the projections into the crop flow region, and the extent of intrusion of the projections being limited by stop means against which the further crop engaging device is urged by the resilient biassing means, the stop means being adjustable to provide the said adjustment means for varying the degree to which the projections intrude into the crop flow.

The projections of the further crop engaging device may take a number of forms. In some preferred arrangements each of the projections has a principal plane which is perpendicular to the axis of rotation of the rotor. Each such said projection may have a curved leading edge, or alternatively this may be straight and upwardly inclined at the distal end. In other arrangements each projection comprises a conical or pyramid shaped projection, and in yet other forms the further crop engaging device may comprise an array of serrated plates having serrations which intermesh with the crop engaging elements on the rotor.

In one preferred form, the said projections of the further crop engaging device comprise an array of rotatable discs mounted for rotation about an axis substantially parallel to the axis of the main rotor.

In accordance with one preferred feature the said array of projections on the further crop engaging device comprises an array of projections which extends transversely across the crop flow region, and which also extends along the direction of crop flow.

The invention has particular application in a so-called high-speed pick-up apparatus in which the drive means is arranged to drive the rotor in rotation at a speed such that at least at the region of first contact between the elements and the crop the crop engaging elements move faster than the crop being conveyed, and that the rotor accelerates the crop by lifting it against the resistance provided by the hood and the further crop engaging device and releases the crop at least predominantly by centrifugal effect.

Rotor speeds may be in the range 500 rev/min to 700 rev/min and satisfactory conditioning may be obtained (where the further crop engaging device is provided for that purpose), for tip speeds down to 17 m/s.

The invention also has particular advantage where each element on the rotor has a principal plane which traverses the general direction of crop flow. Such forms of element are described in our previous specification number GB-A-2099272. In one form such an element comprises a rib-like element extending transversely across the direction of crop flow to a greater extent than it extends outwardly from the support means, and preferably has deep serrations along its outer edge so as to form a plurality of outwardly directed elongate teeth, each said tooth having side edges which converge towards each other in the outward direction. In another form each element comprises a fin-like element extending outwardly from the support means to a greater extent than it extends transversely across the direction of crop flow, and preferably has side edges which at the crop engaging region of the element converge towards each other in the outward direction.

Preferably each crop engaging element of the rotor is formed from stiff, resilient, and generally flat, sheet-like material, conveniently synthetic plastics material.

In a particularly preferred form of the apparatus each element of the rotor has a principal plane which lies within ± 15° of a radial plane containing the axis of rotation of the rotor, preferably lying in the radial plane.

Apparatus according to the invention has particular use where the rotor is mounted on a mobile frame for movement across the ground and the rotor is mounted on the mobile frame with its axis substantially parallel to the ground either in a position such as to pick-up previously cut crop lying on the ground, or in a position such as to receive cut crop from cutting means for cutting crop during movement of the frame over the ground or from a pick-up device for picking up crop from the ground.

The invention has particular use for conditioning cut grass or other fibrous fodder crop by intermeshing of the said projections of the further crop engaging device, and the crop engaging elements of the rotor.

The invention also has use for threshing grain crop or comminuting forage crop, straw, or other material, by intermeshing of the said projections of the further crop engaging device, and the crop engaging elements of the rotor.

In one preferred form of the comminuting apparatus, the crop engaging elements of the rotor are resiliently yieldable at the distal ends thereof, but are rigidly supported at the inner base regions thereof, and the crop engaging elements of the rotor include deep recesses into which the protrusions of the further crop engaging device extend, the projections of the further crop engaging device being sharpened so as to produce comminution of crop forced by the crop engaging elements of the rotor through the array of sharpened projections of the further crop engaging device.

In accordance with the invention in another aspect, there is provided apparatus for conveying and treating crop comprising a crop engaging device in the form of a rotor comprising support means and a plurality of outwardly extending crop engaging elements mounted on the support means for conveying and treating the crop, drive means for driving the rotor in rotation in a sense such that the rotor conveys the crop upwardly and rearwardly over the rotor, a hood extending at least around part of the front half of the rotor and forming with the rotor a crop flow passage between the rotor and the hood along which the crop is conveyed by the rotor, a further crop engaging device for co-operating with the rotor to effect treatment of crop, the further crop engaging device being mounted during normal operation at a stationary position relative to the rotor but being resiliently mounted to allow yielding movement in response to high crop load or heavy objects other than crop, the further crop engaging device comprising an array of projections which project into the crop flow, the further crop engaging device being positioned at the intake region of the said crop flow passage, the intake region lying in the front half of the periphery of the rotor, and adjustment means for varying the extent to which the projections intrude into the crop flow, the range of adjustment including a position in which the projections overlap with the outer periphery of the rotor and intermesh with the elements of the rotor without contact between the projections and the crop engaging elements of the rotor.

There is also provided in accordance with the present invention a method of conveying and treating crop comprising the steps of rotating a crop engaging device in the form of a rotor in a sense such as to convey crop upwardly and rearwardly over the rotor, the rotor comprising support means and a plurality of outwardly extending crop engaging elements mounted on the support means for conveying and treating the crop, treating the crop by co-operation of the rotor and a further crop engaging device the further crop engaging device comprising an array of projections which project into the crop flow region, which overlap with the outer periphery of the rotor, and which intermesh with the elements of the rotor without contact between the projections and the crop engaging elements of the rotor, the arrangement being such that the projections of the further crop engaging device extend along the direction of crop flow, and the further crop engaging device co-operates with the rotor to form the intake region of the crop flow passage, the intake region lying in the front half of the periphery of the rotor, and conveying the crop by the rotor along the crop flow passage between the rotor and a hood which extends at least around part of the front half of the rotor.

In accordance with the conditioning aspect, the invention may be regarded as providing, at least in preferred embodiments, means for controlling and directing cut crop collected from the ground or coming directly from a preceding mower, to intensify the effectiveness of a conditioning rotor by forcing the incoming crop into intimate contact with the conditioning elements and to increase the length of the treatment path and the duration of effective influence of the conditioning elements on the crop, the extreme range of setting of the device including overlap with the conditioning rotor envelope, the mounting and suspension of the device being designed to resist the loads imposed by normal crop flow but the device being arranged to yield as one unit or in sections in response to atypically high loads due to the crop stream varying exceptionally in bulk or density, or due to foreign bodies being entrained in the crop stream, the leading edges of the device being shaped to encourage smooth flow and to minimise intermittency of crop entering the nip between the periphery of the conditioning rotor and the said device.

It is a preferred feature of the comminuting form of the invention that the crop collecting rotor has planar pick-up elements which are resilient in their tip regions but rigidly supported and recessed in their base regions, to achieve comminution of the collected crop by forcing it through an array of sharpened static protrusions which register with recesses between the crop engaging elements of the rotor.

Embodiments of the invention will now be described by way of example with reference to the accompanying drawings in which:-

Figure 1 shows diagrammatically in cross-sectional side view apparatus for conveying and treating crop embodying the present invention;

Figure 1(a) shows diagrammatically a view along the direction A in Figure 1;

Figures 1(b), (c) and (d) show in diagrammatic side view alternative forms of a stationary crop engaging device generally similar to that shown in Figure 1;

Figure 2 is a diagrammatic side view of a modified form of the apparatus shown in Figure 1;

Figure 3 is a further diagrammatic side view of an alternative embodiment of the invention, in which two rotors are provided for picking up, conveying and treating crop;

Figure 4 shows diagrammatically in cross-sectioned side view a further modified apparatus for conveying and treating crop, embodying the invention;

Figure 5 shows in diagrammatic side section an alternative embodiment of the invention for chopping straw or like material; and

Figure 6 shows a section along the lines A-A in Figure 5.

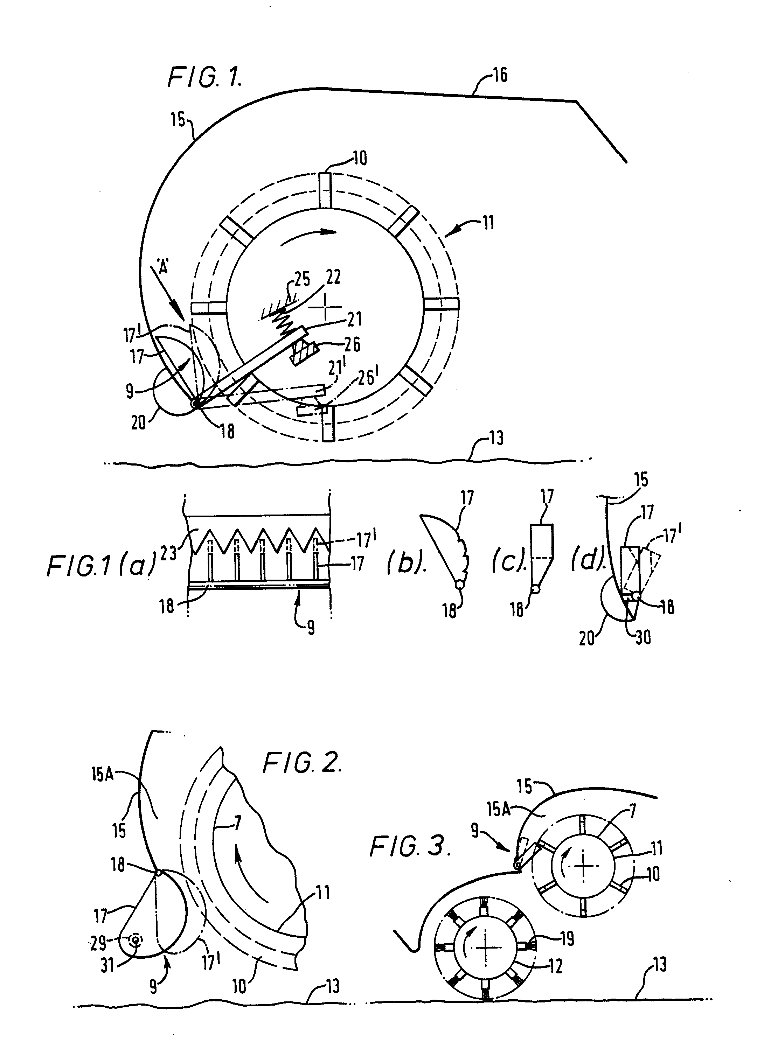

Figure 1 shows in a diagrammatic, cross-sectional side view apparatus for conveying and treating crop, for example apparatus for picking up grass or other fibrous fodder crop from the ground and conditioning the crop and depositing the conditioned crop back onto the ground. The apparatus consists of a horizontal rotor indicated generally at 11, which may be mounted on a tractor and moved across the ground 13, and rotated by drive means - (not shown) powered by the pto at the front or rear of the tractor. The rotor 11 is driven in rotation in a sense such as to pick up cut crop from the ground and carry the crop upwardly and rearwardly over the rotor, beneath a hood 15 (also known as a housing, cowling, or shroud). The hood 15 defines between the rotor and the inner side of the hood a crop flow passage along which the crop is conveyed by the rotor 11.

The form of rotor shown is sometimes referred to as a "high-speed" pick-up rotor which consists of a rotor driven at a speed of rotation such that at least at the region where the crop is picked up, the crop engaging elements move faster than the crop during acceleration; that the hood in front of at least part of the rotor above the intake region prevents crop from being thrown forward; and that at the release region the crop is released at least predominantly by the effect of centrifugal force, although the release may be assisted by additional means such as a stripping rotor. The high-speed pick-up rotor accelerates the crop by lifting it against the resistance provided by the front cover or hood, usually accelerating the crop through a restriction at the intake region, into a diverging crop flow passage. Typically the rotor may operate at rotational speeds in the range 400 to 900 revs per minute. The rate of rotation is preferably arranged to be such that the circumferential tip velocity of the crop engaging elements on the rotor is in the range 10 to 35 m/s, preferably 10 to 25 m/s.

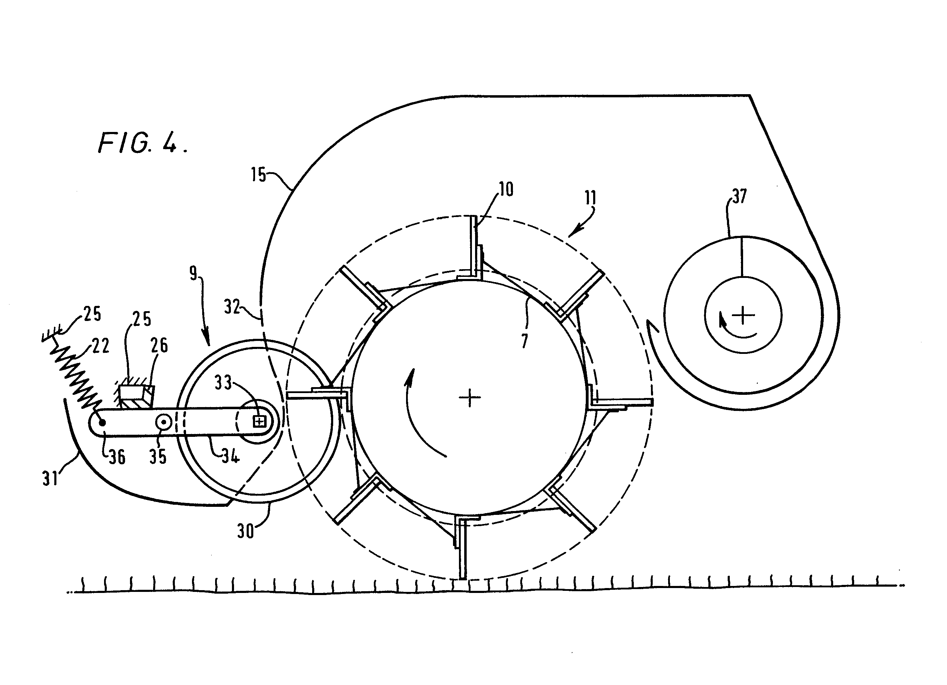

The preferred form of conveying and treating rotor with which the present invention is concerned, is generally of the kind described in our previously published patent application GB-A-2099272, that is to say a rotor having a plurality of outwardly extending crop engaging elements, each of which has a principal plane which traverses the general direction of crop flow. In the embodiments shown in the specification, the crop engaging elements are indicated generally at 10, mounted on a core 7 and each element has a principal plane lying generally within ± 15° of a radial plane of the rotor passing through the axis of rotation. Conveniently the crop engaging elements of the rotor may comprise transverse ribs which are deeply serrated (for example as shown at 23 in Figure 1a or in Figure 4), or the elements may consist of fin-like projections each of which extends outwardly to a greater extent than it extends transverse to the direction of crop flow, with side edges which converge in the outward direction.

The hood 15 extends around the rotor 11 and then extends rearwardly at 16 to direct the cut crop rearwardly and downwardly onto the ground. However the crop may in other arrangements be directed to a receptacle or to further crop processing machinery such as the chopping mechanism of a forage harvester. Also, in other embodiments, the rotor 11 may be arranged to pick-up cut crop directly from the rear of a cutting mechanism, for example a drum or disc type cutting mechanism.

In embodiments of the invention, there is provided a further crop engaging device 9 for cooperating with the rotor, to effect treatment of the crop. In the embodiment of Figure 1, this further crop engaging device 9 comprises an array of laterally spaced, half-moon shaped flat vanes 17 fixedly mounted on a transverse, horizontal, pivoted shaft 18 extending across the apparatus at the intake region of the hood 15. The vanes 17 may be made conveniently of sheet metal or synthetic plastics material.

At the front of the hood 15 is provided an optional, forwardly protruding crop guide means 20. At the trailing, lower end of the crop guide means 20 is provided the further crop engaging device 9.

The transverse shaft 18 extends outwardly outside the rotor housing 15 at one or both sides of the apparatus, and at one or both ends of the shaft 18 are secured control means for example the levers 21 at positions clear of the rotor housing end plates (not shown). In the Figures, it will be assumed for simplicity that a single lever 21 is provided. Referring to Figure 1, the lever 21 is urged in a clockwise direction about the axis of the horizontal shaft 18 by a compression spring 22 which acts between the lever 21 and part of the main frame, indicated diagrammatically at 25. Since the vanes 17 are fixedly mounted on the shaft 18, which is also fixedly mounted relative to the lever 21, the vanes 17 are also urged in the clockwise direction about the axis of the shaft 18, by the spring 22. This movement of the lever 21 and the vanes 17 is limited by a stop 26 which may carry a rubber buffer, and which, during operation, is fixed relative to the main frame of the apparatus. However the stop 26 is adjustably mounted on the main frame and may be moved through a range of positions to a position shown in broken lines at 26' This adjustment may be achieved for example by simple clamping means or by a screw threaded support (not shown) which may be rotated relative to a fixed collar rigidly mounted on the main frame of the apparatus.

As shown in dotted lines in Figure 1, movement of the lever 21 to the position shown in broken lines at 21' effects adjustment of the position of the vanes 17 to the position shown in broken lines at 17', in which the vanes 17' intermesh with the serrated profile of the crop engaging elements 23 of the rotor 11.

Thus the adjustable stop 26 locates the lever 21 in one direction, while the compression spring 22 holds the lever 21 in the other direction. The effect of the spring 22 may also be adjusted, by providing for variation of the position of the member 25, so as to increase or decrease the biassing force exerted by the spring 22. The spring 22 is arranged to allow yielding only when a preset normal load on the array of vanes 17 is exceeded under atypical circumstances, such as when a foreign object is entrapped in the crop stream.

In the broken outline shown in Figures 1 and 1a, the vanes 17 of the crop engaging device 9 are shown to be overlapping the envelope of the rotor 21, without making contact with the conditioning elements 10, which may be any form of regularly spaced and aligned protrusions or transversely profiled ribs. As shown in Figure 1(a) which illustrates a view in the direction A in Figure 1 the half-moon shaped vanes 17 of the device 9 register with the recesses in successive transverse ribs 23 of serrated toothed profile. The depth of intrusion depends on the setting of the lever 21 against the stop 26.

Although the rotor 11 is shown to be of the pick-up type for collecting cut crop from the ground, it can also be a rotor superimposed at the rear of a mower, in which case the cut crop flows directly into the rotor, requiring the front opening of the rotor cover to be somewhat higher.

Also, the arrangement of Figure 1 can be used for chopping straw and other material, especially if the vanes 17 are sharpened.

In Figures 1(b), (c) and (d) are shown alternative crop guide vanes which may be used, and which respectively are half-moon shaped with a recessed edge profile; triangular with an optional extension along the line of crop flow to prolong the crop retardation effect; and rectangular, optionally with the downstream corner of the leading edge rounded or cut off, as shown in broken lines. Particularly for the arrangement of the rectangular crop guide fin shown in Figure 1(d), the pivot shaft 18 may be positioned on a hollow pedestal section 30 of the rotor cover 15 at the intake end. In other alternatives (not shown) the fins may be constructed from a transverse strip of flat metal by making deep saw cuts at appropriate intervals and twisting the free ends of the longitudinal strips thus formed through 90°. This configuration avoids the need for constructing a mounting pedestal as mentioned above.

In Figure 2 there is shown an alternative arrangement in which the array of crop guide vanes 17 is hinged at the trailing ends of the vanes at the shaft 18. The shape is so chosen that the array of vanes 17 can replace the intake section of the rotor cover 15 which was shown at 20 in Figure 1. Optionally, a bar 31 passed through aligned holes in the tip sections of the vanes 17 and provided with spacers 29 between pairs of adjacent vanes, may be arranged to give rigidity and accurate spacing to the assembly. As in the arrangement shown in Figure 1, a lever or levers 21 extending from the pivot shaft 18 are located outside the end plates of the rotor housing by adjustable stops and adjustable biassing springs.

The function of the crop guide vanes 17 is to force the crop into intimate contact with the elements of the rotor and retard the crop flow. In addition, the vanes have the further function of causing abrasion to material in the upper layers of the crop stream. This further increases the treatment effect.

In a modification of the apparatus of Figure 1 - (not shown) the further crop engaging device 9 may consist of a spring-loaded plate having rows of cone-shaped protrusions, which may be pressed out of the plate, or attached to the plate. The protrusions maybe arranged so that they are in register in terms of their lateral spacing with the elements 10 on the rotor 11. Also, the cone angle may be selected so as to be in register with the angle of the serrations in the ribs 23. The shape of the plate may be such that in each row, successive cones penetrate more deeply into the recesses of the serrations of the ribs 23. In such an arrangement a hinged plate carrying the cone-shaped protrusions may form the lowermost section of the rotor cover 15. At the downstream end of the plate the plate may abut against adjustable stops which are attached to the main section of the rotor cover 15, the plate being pivoted at the upstream end.

Figure 3 shows in diagrammatic side view a twin rotor apparatus embodying the invention. In the example shown the lower, rotor 12 consists of a brush pick-up rotor comprising a number of outwardly directed brush tufts 19, which may be generally of the kind disclosed in our prior published patent specification WO/7900863. The upper rotor 11 may be generally of the kind disclosed in our prior published U.K. patent specification No. GB-A-2099272, and as described hereinafter with reference to Figures 4. There is provided at the intake to the upper rotor 11 a further crop engaging device 9, which may be of the kind described hereinbefore with reference to the preceding figures. During operation, material is accelerated and treated by the lower rotor, and is then thrown against the upper rotor, re-accelerated, and passed through the treatment intensifying device 9, and for example finally formed into a swath on the ground.

In Figure 4 there is shown a modification of the apparatus of Figure 1, for conveying and treating crop, in which the further crop engaging device 9 is provided by an array of rotatable discs 30 in place of the half-moon shaped elements 17 in Figure 1. Components in Figure 4 which correspond to components in Figure 1 are indicated by like reference numerals.

As in the previous embodiment, a pick-up rotor 11 rotates about a horizontal axis and picks up crop and carries the crop upwardly and rearwardly over the rotor beneath an overhead hood 15. The hood 15 has a front portion 31 which leads downwardly and then upwardly to join the main overhead hood, and there is defined a portion 32 which has a number of slots therein through which protrude a series of discs 30 arranged in an array across the front of the apparatus. The discs 30 may be mounted on a common shaft 33, or alternatively each disc may be mounted on its own shaft. If a common shaft is provided it may be supported on two spaced apart arms 34, or alternatively each disc 30 may be mounted on a pair of arms 34 individual thereto. The support arms 34 are pivotable about a pivot shaft 35 so that the discs 30 are retractable through the slots 32 away from the rotor 11 by pivotting about the pivot shaft 35 against the effect of a bias spring 22. The bias spring 22 is connected between an end 36 of the arm 34, and part of the frame 25 of the apparatus. The extent of protrusion of the discs 30 towards the rotor 11 is limited by a rubber-covered stop 26 mounted on the main frame 25.

Behind the main rotor 11, an auger 37 collects crop thrown from the main rotor 11 by centrifugal force and transfers the crop sideways to a collection receptacle (not shown).

The discs 30 may be freely rotating, or may be adjustably braked, or may be driven in either direction. In some preferred arrangements the discs may be driven in co-rotation with the main rotor 11, or may be driven in contra-rotation with the main rotor 11 but at a slower peripheral speed, so as to exert a retarding effect on the crop.

In operation, the crop engaging elements 10 of the rotor 11 pick-up crop from the ground and lift the crop upwardly and rearwardly over the rotor. The elements intermesh with the discs 30 without touching the discs. Under light load the discs 30 protrude fully into the gaps between the elements 10 on the main rotor 11, and thoroughly condition the crop. Under a heavy load, or in the face of an unwanted object, the discs 30 retract by pivotting of the arm 34. Whether fully protruding or retracted, the discs 30 co-operate with the rotor 11 to form the intake region of the crop flow passage between the rotor 11 and the hood 15.

The discs described are suitable in both the conditioning use of the invention, and also in a chopping or comminution use of the invention will be described hereinafter. It is preferred that the disc array is made in two halves, or made up of a larger number of sections, or even (as mentioned) individually mounted discs. The units can be independently retractable, to protect the mechanism against overload or foreign bodies. If a drive is provided, then a configuration in which the disc array is divided into two sections is most appropriate, the drive being provided from each side, and any retracting movement being arranged by pivoting the supporting levers about the centre of a drive pulley or sprocket.

The main rotor 11 may, in each of the embodiments conveniently be of the form shown in our UK patent application No: GB-A-2099272 for example as shown in Figure 7(a), 7(b) or 8 of that specification. The main rotor 11 conveniently has transverse rib-like elements 23 mounted on a supporting core 7, and each rib 23 may be mounted by a plurality of bolts (not shown) passing through resilient washers. Each bolt passes through, for example, resilient washers formed of synthetic plastics material, which allow yielding of the element 23 by a rocking motion against an angle bar, the washers being deformed by the rocking motion. The ribs 23 are deeply serrated to provide a plurality of outwardly directed teeth, each tooth having side edges converging towards each other in the outward direction. It is important that the ribs 23 are arranged so that the teeth of the ribs are in register with each other around the circumference of the rotor. By way of example, the diameter of the rotor may be 550mm, and may be rotated at 700 revs per minute.

Considering the embodiments of the invention in general, these provide adjustable crop engaging devices 9 which encourage continuous and uniform crop flow into the zone where there is interaction with rotor elements 10, and the treatment effect is intensified by the presence of crop engaging edges, or successions of tipped protrusions, arranged in the general direction of crop flow, and arranged to interact with the arrays of the elements on the rotor periphery. The crop engaging edges or successions of tipped protrusions are able to intrude into the rotor envelope without making contact with the elements on the rotor even at the extreme end of the adjustment range of maximum intrusion.

Suitable materials for the crop engaging element 10 of the rotor, and for the projections of the further crop engaging device 9, are synthetic plastics material such as polyurethene, nylon and polypropylene, although rigid, non-resilient, materials such as sheet-metal may be used, provided that appropriate resilient mounting means are also provided. The profiles of the crop engaging elements may vary from the "scalloped" profile shown.

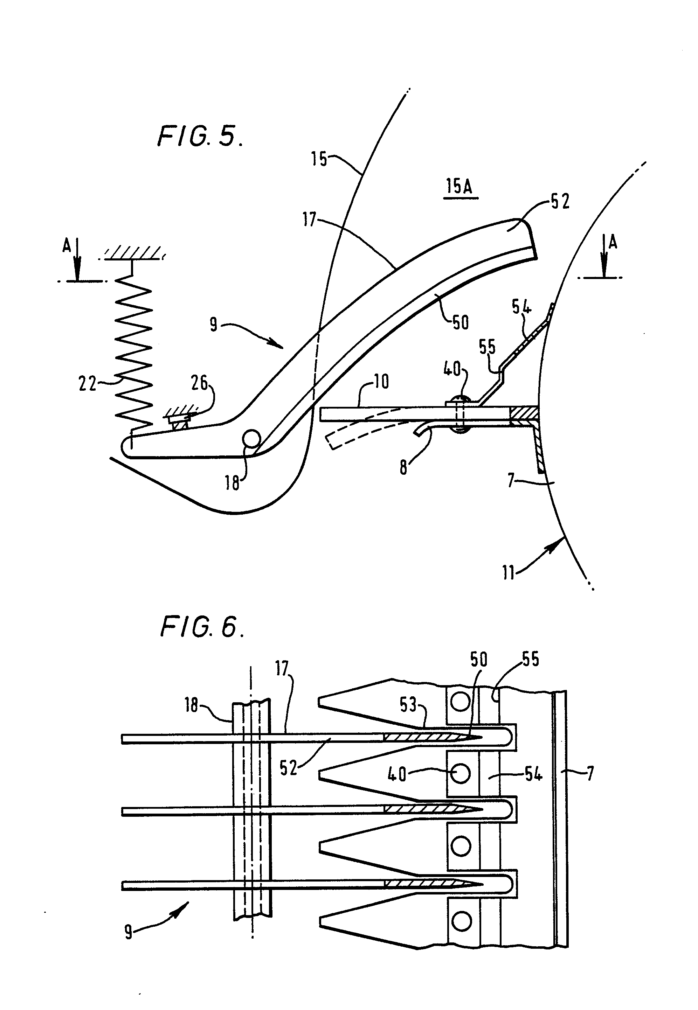

In Figures 5 and 6 there is shown a modification of the apparatus of Figure 1, which may be used for chopping forage crops such as grass, or straw or other material. The apparatus consists of a rotor 11 having a solid core 7 with transverse rows of resilient elements 10 mounted by bolts 40 on flanges 8 in such a manner that the tips of the elements 10 can be deflected, for example by inadvertent ground contact or as a result of atypical heavy loads. The elements are also held by further brackets 54 each having a step 55. A hood 15 extends at least around part of the front half of the rotor 11, and forms with the rotor a crop flow passage indicated generally at 15A. Intruding into the entrance of the crop flow passage are the projections 17 of a further crop engaging device indicated generally at 9, the projections of this embodiment consisting of pivoted knives 52 provided with bevelled cutting edges 50. A resilient mounting arrangement for the projections 17 is provided, generally performing the same function as the arrangement in Figure 1, and like elements are indicated by like reference numerals. The knives 52 pivot about a pivot shaft 18 and are urged individually or in pairs or multiples by a spring 22 against adjustable stops 26. The spring loading by the spring 22 is also adjustable.

In operation, the rotor is set in such proximity to the ground that crops lying in swaths, windrows or in a scattered form on the field surface are lifted and accelerated. The angle of the knives 52 relative to the pick-up elements 10 is such that the loose crop is forced towards the rotor core against the centrifugal effect. The knives 52 register with recesses in the elements 10 (shown at 53 in Figure 6), the recesses also existing between all mounting and support components 8, 40, 54. It should be noted that the depth of intrusion of the knives 52 into the recesses 53 can be varied. It is a feature that the knives 52 can retract beyond the outer periphery of the rotor if necessary under excess load. In different embodiments, the dimensions of the co-operating components can also be varied. Moreover, the knives may take different shapes, for example the half-moon shape shown in Figure 1. Knife spacing laterally determines the fineness of chop and can be arranged to meet specific requirements.

The apparatus which has been described above as a chopper gives the particular advantage of combining the functions of a pick-up rotor and a comminution apparatus. Its principal features include:-

i) deflection of the crop away from the tips of the pick-up elements 10 towards the core 7 by the shape of the knives;

ii) crop deflection away from the rotor core 7 into the cutting region by centrifugal force and by means of the inclined supports 54 leading the elements 10;

iii) provision of a favourable cutting and slicing angle due to co-operation of the knives 52 and the pick-up elements 10;

iv) prevention of escape of crop (up to the core 7) by the steep angle of the circumferentially reclined support brackets 54 and by provision of the step 55 in the support bracket 54; and

v) individually sprung, pivoted knives 52 which afford a large measure of damage protection.

The embodiment which has been discussed with reference to Figures 5 and 1, may be adapted to a twin rotor mechanism generally as shown in Figure 3, in which a primary rotor collects the crop and feeds it into a rotary cutting and slicing device, as described above, but in which the rotating crop conveying and supporting elements 10 need not be flexible in their tip regions, since ground contact cannot be made.

At the outlet of a chopping mechanism as has been described, the chopped material may be directed by a rotor cover into an optional transverse auger (not shown) for moving the comminuted crop into a pneumatic or mechanical elevating system - (not shown) which may deliver it into a bulk trailer in the manner which is normal in forage harvesting.

It is to be appreciated that the chopping mechanism shown may be used for a number of purposes, for example chopping forage material for preservation and use by cattle, or for chopping unwanted material such as straw, which may then be distributed by one or more rotating discs provided with vanes for spreading the chopped straw over a width greater than that of the pick-up mechanism.

In modifications, there may be provided a second transverse array of cutting knives, to increase the fineness of the chop, particularly with straw, and to catch any stems which may have escaped the first bank of knives for example when one or more knives are deflected by foreign objects.

## Claims

1. Apparatus for conveying and treating crop comprising

a crop engaging device in the form of a rotor (11) comprising support means (7) and a plurality of outwardly extending crop engaging elements (10) mounted on the support means (7) for conveying and treating the crop,

drive means for driving the rotor (11) in rotation in a sense such that the rotor (11) conveys the crop upwardly and rearwardly over the rotor,

a hood (15) extending at least around part of the front half of the rotor (11) and forming with the rotor a crop flow passage (15A) between the rotor (11) and the hood (15) along which the crop is conveyed by the rotor, and

a further crop engaging device (9) for co-operating with the rotor (11) to effect treatment of crop,

characterised in that the further crop engaging device (9) comprises an array of projections (17,30) which project into the crop flow region, which overlap with the outer periphery of the crop engaging elements (10) of the rotor (11), and which intermesh with the elements (10) of the rotor (11) without contact between the projections (17,30) and the crop engaging elements (10) of the rotor (11), the arrangement being such that the projections - (17,30) of the further crop engaging device (9) extend along the direction of crop flow, and the further crop engaging device (9) co-operates with the rotor (11) to form substantially the intake region of the crop flow passage, the intake region lying in the front half of the periphery of the rotor (11).

2. Apparatus according to claim 1 including adjustment means (26) for varying the extent to which the projections (17,30) intrude into the crop flow region, and in which the projections (17,30) of the further crop engaging device (9) have a profile along the direction of crop flow which co-operates with the outer periphery of the rotor (11) to provide a converging intake region to the crop flow passage, the shape of the projections (17,30) being such that adjustment of the amount of intrusion into the crop flow can be made without any substantial change of the shape of the said converging intake region.

3. Apparatus according to claim 1 or 2 in which the further crop engaging device (9) is mounted during normal operation at a stationary position relative to the rotor (11) but is resiliently mounted to allow yielding movement in response to high crop load or heavy objects other than crop, the resilient mounting of the further crop engaging device comprising means (18) allowing retracting movement of the array of projections (17) so as to produce lesser or greater intrusion of the projections into the crop flow, the retracting movement of the array being biassed by resilient biassing means (22) towards the position of greater intrusion of the projections (17) into the crop flow region, and the extent of intrusion of the projections (17) being limited by stop means (26) against which the further crop engaging device (9) is urged by the resilient biassing means (22), the stop means (26) being adjustable to provide the said adjustment means for varying the degree to which the projections intrude into the crop flow region.

4. Apparatus according to claim 1, 2 or 3 in which each of the said projections (17) has a principal plane which is perpendicular to the axis of rotation of the rotor (11).

5. Apparatus according to claim 4 in which each said projection (17) has a curved outer perimeter.

6. Apparatus according to any preceding claim in which the said projections of the further crop engaging device comprise an array of rotatable discs mounted for rotation about an axis substantially parallel to the axis of the main rotor.

7. Apparatus according to any preceding claim in which the drive means is arranged to drive the rotor (11) in rotation at a speed such that at least at the region of first contact between the elements - (10) and the crop, the crop engaging elements move faster than the crop being conveyed, and that the rotor (11) accelerates the crop by lifting it against the resistance provided by the hood (15) and the further crop engaging device (9) and releases the crop at least predominantly by centrifugal effect.

8. Apparatus according to any preceeding claim in which each element (10) on the rotor (11) has a principal plane which traverses the general direction of crop flow.

9. Apparatus according to claim 7 in which each element (10) comprises a rib-like element - (23) extending transversely across the direction of crop flow to a greater extent than it extends outwardly from the support means, and having deep serrations along its outer edge so as to form a plurality of outwardly directed elongate teeth, each said tooth having side edges which converge towards each other in the outward direction.

10. Apparatus according to any preceding claim in which the rotor (11) is mounted on a mobile frame for movement across the ground and the rotor is mounted on the mobile frame with its axis substantially parallel to the ground in a position such as to pick-up previously cut crop lying on the ground, or to receive cut crop from cutting means for cutting crop during movement of the frame over the ground.

11. A method of conveying and treating crop comprising the steps of

rotating a crop engaging device in the form of a rotor in a sense such as to convey crop upwardly and rearwardly over the rotor, the rotor comprising support means and a plurality of outwardly extending crop engaging elements mounted on the support means for conveying and treating the crop,

treating the crop by co-operation of the rotor and a further crop engaging device the further crop engaging device comprising an array of projections which project into the crop flow region, which overlap with the outer periphery of the rotor, and which intermesh with the elements of the rotor without contact between the projections and the crop engaging elements of the rotor, the arrangement being such that the projections of the further crop engaging device extend along the direction of crop flow, and the further crop engaging device cooperates with the rotor to form the intake region of the crop flow passage, the intake region lying in the front half of the periphery of the rotor, and

conveying the crop by the rotor along the crop flow passage between the rotor and a hood which extends at least around part of the front half of the rotor.

0 211 658

FIG. 1.

FIG.1 (a)    (b).    (c).    (d).

FIG. 2.

FIG. 3.

FIG. 4.

0 211 658

*FIG. 5.*

15

15A

52

17

50

A

54

9

55

22

26

40

10

18

8

7

11

*FIG. 6.*

50

55

17

18

53

52

40

54

7

9

European Patent Office

# EUROPEAN SEARCH REPORT

Application number

EP 86 30 6083

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | EP-A-0 065 416 (NATIONAL RESEARCH DEVELOPMENT) * Page 35, lines 6-20; page 47, lines 11-15; figure 1B * & GB-A-2 099 272 (Cat. D) | 1,2,4 | A 01 D 82/00 A 01 D 43/10 |
| E | | 7-11 | |
| Y | FR-A-2 479 648 (CLAAS) * Page 3, line 10 - page 4, line 10 * | 1,2,4, 7-11 | |
| A | | 3,6 | |
| X | FR-A-1 194 282 (BEUDY) * Whole document * | 1,11 | TECHNICAL FIELDS SEARCHED (Int. Cl.4) |
| A | DE-C- 862 383 (SCHULZE) * Figure 1 * | 5 | A 01 D A 01 F |
| P,X | WO-A-8 602 521 (NATIONAL RESEARCH DEVELOPMENT) * Page 11, line 8 - page 15, line 16; page 20, line 23 - page 21, line 10 * | 1,7-11 | |
| A | | 3 | |
| | --- -/- | | |

The present search report has been drawn up for all claims

| Place of search | Date of completion of the search | Examiner |
|---|---|---|
| THE HAGUE | 22-10-1986 | DE LAMEILLIEURE D. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | GB-A- 588 439 (CHILTON) | | |
| | --- | | |
| A | FR-A-2 107 042 (BUCHER-GUYER) | | |
| | ----- | | |

TECHNICAL FIELDS SEARCHED (Int. Cl.4)

The present search report has been drawn up for all claims

| Place of search | Date of completion of the search | Examiner |
|---|---|---|
| THE HAGUE | 22-10-1986 | DE LAMEILLIEURE D. |